# EUROPEAN PATENT APPLICATION

(11) **EP 4 814 710 A1**
(43) Date of publication of application: **30.09.2026**
(21) Application number: 24914664.8
(22) Date of filing: 05.01.2024
(51) Int. Cl.: G06F 9/445

(54) **AI MODEL DEPLOYMENT METHOD AND APPARATUS, ELECTRONIC DEVICE, MEDIUM AND PROGRAM PRODUCT**

(71) Applicant: Siemens Aktiengesellschaft, 80333 München (DE)
(72) Inventor: TANG, Lisan, Shanghai 200082 (CN); HU, Feihuang, Shanghai 200082 (CN); ANICET ZANINI, Rafael, 91058 Erlangen (DE); DE ARAUJO FILHO, Djaci Alves, 91058 Erlangen (DE); KESSLER, Alexander, 90475 Nürnberg (DE)
(74) Representative: Isarpatent
(86) International application number: PCT/CN2024/070881
(87) International publication number: WO 2025/145435

(57) **Abstract**

An artificial intelligence (AI) model deployment method, an electronic device, a medium, and a computer program product are provided, relating to the field of AI. The method includes: receiving an AI model in a first format that has been trained by a user; determining a target inference device; determining at least one second format of the AI model that is supportable by the target inference device; determining a plurality of conversion paths based on the first format and the second format; converting the AI model in the first format through each of the plurality of conversion paths, to obtain a plurality of AI models in a second format; and performing performance evaluation by deploying the plurality of AI models in the second format to the target inference device, to determine an optimal AI mode.

## Description

### TECHNICAL FIELD

Embodiments of this application mainly relate to the field of artificial intelligence (AI), and in particular, to an AI model deployment method, an electronic device, a medium, and a computer program product.

### BACKGROUND

With the continuous deepening of research and application of artificial intelligence (AI) across all fields of society, the application of AI in the industrial circle has become increasingly widespread. Various field devices such as industrial personal computers, edge devices, and programmable logic controllers (PLCs), utilize AI to perform inference during the production and operation of factories.

Field devices generally have relatively limited computing capabilities, and thus are typically unable to directly run various types of different AI models. AI model development engineers focus primarily on the AI models and cannot fundamentally understand model requirements of target devices, while automation engineers familiar with the target devices lack sufficient proficiency in AI technologies. This leads to a situation where deployment of trained AI models onto field devices still requires joint collaboration of AI engineers and automation engineers, which undoubtedly incurs substantial time and resource overheads.

### SUMMARY

Embodiments of this application provide an artificial intelligence (AI) model deployment method and apparatus, an electronic device, a medium, and a program product. Embodiments of this application enable the convenient and rapid deployment of AI models to target inference devices at a factory site.

According to a first aspect, an AI model deployment method is provided, including: receiving an AI model in a first format that has been trained by a user; determining a target inference device; determining at least one second format of the AI model that is supportable by the target inference device; determining a plurality of conversion paths based on the first format and the second format; converting the AI model in the first format through each of the plurality of conversion paths, to obtain a plurality of AI models in a second format; and performing performance evaluation by deploying the plurality of AI models in the second format to the target inference device, to determine an optimal AI model.

According to a second aspect, an AI model deployment apparatus is provided, including: a receiving module, configured to receive an AI model in a first format that has been trained by a user; a first determining module, configured to determine a target inference device; a second determining module, configured to determine at least one second format of the AI model that is supportable by the target inference device; a third determining module, configured to determine a plurality of conversion paths based on the first format and the second format; a conversion module, configured to convert the AI model in the first format through each of the plurality of conversion paths, to obtain a plurality of AI models in a second format; and an evaluation module, configured to perform performance evaluation by deploying the plurality of AI models in the second format to the target inference device, so as to determine an optimal AI model.

According to a third aspect, an electronic device is provided, including: at least one memory, configured to store computer-readable code; and at least one processor, configured to invoke the computer-readable code to perform the steps of the method provided in the first aspect.

According to a fourth aspect, a computer-readable medium is provided. The computer-readable medium stores computer-readable instructions, the computer-readable instructions, when executed by a processor, causing the processor to perform the steps of the method provided in the first aspect.

According to a fifth aspect, a computer program product is provided. The computer program product is tangibly stored on a computer-readable medium and includes computer-executable instructions, the computer-executable instructions, when executed, causing at least one processor to perform the steps of the method provided in the first aspect.

### BRIEF DESCRIPTION OF THE DRAWINGS

The following accompanying drawings are merely intended to provide schematic illustrations and explanations of embodiments of this application, and are not intended to limit the scope of embodiments of this application. In the drawings:
FIG. 1 is a schematic diagram of an artificial intelligence (AI) model deployment method according to an embodiment of this application;
FIG. 2 is a schematic diagram of an AI model deployment apparatus according to an embodiment of this application; and
FIG. 3 is a schematic diagram of an electronic device according to an embodiment of this application.

### Description of reference numerals

| | | | | | |
|---|---|---|---|---|---|
| 100: | AI model deployment method | 101-106: | Method steps | 20: | AI model deployment apparatus |
| 21: | Receiving module | 22: | First determining module | 23: | Second determining module |
| 24: | Third determining module | 25: | Conversion module | 26: | Evaluation module |
| 300: | Electronic device | 301: | Processor | 302: | Communication interface |
| 303: | Memory | 304: | Communication bus | 305: | Program |

### DETAILED DESCRIPTION

A subject described herein is discussed now with reference to exemplary implementations. It should be understood that discussion of the implementations is merely intended to make a person skilled in the art better understand and implement the subject described herein, and is not intended to limit the protection scope of the claims, the applicability, or examples. Changes may be made to functions and arrangements of the discussed elements without departing from the protection scope of the content of embodiments of this application. Various processes or components may be omitted, replaced, or added in each example as required. For example, the described method may be performed according to a sequence different from the sequence described herein, and steps may be added, omitted, or combined. In addition, features described with respect to some examples may also be combined in another example.

As used herein, the term "including" and its variants represent open terms, meaning "including but not limited to". The term "based on" means "at least partially based on". The terms "one embodiment" and "an embodiment" mean "at least one embodiment". The term "another embodiment" means "at least one other embodiment". The terms "first", "second", and the like may refer to different objects or the same object. Another explicit or implicit definition may be included below. Unless otherwise clearly specified in the context, a definition of a term is consistent throughout the specification.

Embodiments of this application are described in detail below with reference to the accompanying drawings.

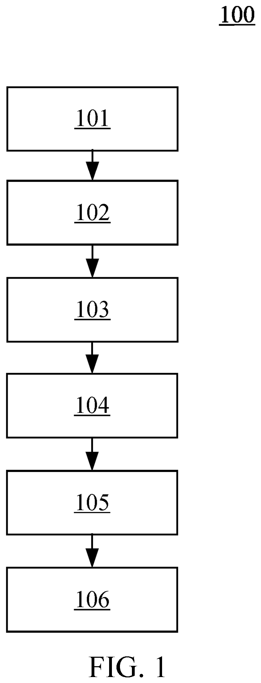

FIG. 1 is a schematic diagram of an AI model deployment method according to an embodiment of this application. As shown in FIG. 1, an AI model deployment method 100 includes the following steps.

Step 101: Receive an AI model in a first format that has been trained by a user.

Step 102: Determine a target inference device.

Optionally, a corresponding target inference device is recommended through an intelligent operation and maintenance platform such as artificial intelligence for IT operations (AIOps) or machine learning operations (MLOps) based on the AI model in the first format. Optionally, all target inference devices connected to a system are identified and determined through the intelligent operation and maintenance platform. Optionally, a target inference device specified by the user may be determined.

Step 103: Determine at least one second format of the AI model that is supportable by the target inference device.

Optionally, the at least one second format of the AI model that is supportable by the target inference device is determined based on an attribute of the target inference device.

Optionally, different target inference devices may support different numbers of model formats. Therefore, the second format may be one format or a plurality of different formats. The attribute of the target inference device refers to a type of a processing chip included in the target inference device, for example, one or more of a central processing unit (CPU), a graphics processing unit (GPU), a neural processing unit (NPU), a video processing unit (VPU), and a tensor processing unit (TPU). A more universal processing chip included in the target inference device, such as a CPU or a GPU, indicates more supportable second formats.

Step 104: Determine a plurality of conversion paths based on the first format and the second format.

Optionally, among a plurality of preset model converters, all possible conversion paths are traversed by using the first format (assumed to be format A) as the start and the second format (assumed to be format D) as the target, for example, from format A to format B, from format B to format C, from format C to format D, from format D to format E, and from format B to format D. In other words, all possible conversion paths are retrieved. In this example, the possible conversion paths include:
path 1: from format A to format B, then from format B to format C, and then from format C to format D; and
path 2: from format A to format B, and then from format B to format D.

Step 105: Convert the AI model in the first format through each of the plurality of conversion paths, to obtain a plurality of AI models in a second format.

In an embodiment, before step 104, all preset plug-ins are traversed, and a format configured for conversion of each of the plug-ins is determined. Next, a plurality of conversion paths are determined based on the first format and the second format. Each of the plurality of conversion paths includes at least one plug-in. Then, the AI model in the first format is converted through the plug-in included in each of the plurality of conversion paths, to obtain the plurality of AI models in the second format.

Optionally, the preset plug-ins include at least one preset plug-in, and one plug-in may include a program conversion from a format to another format, or may include a plurality of program conversions, for example, a conversion from format A to format B, a conversion from format B to format C, and a conversion from format A to format C.

Step 106: Perform performance evaluation by deploying the plurality of AI models in the second format to the target inference device, to determine an optimal AI model.

The optimal AI model includes an AI model that requires less inference time and/or consumes few resources on the target inference device. Optionally, the inference time required on the target inference device may be preferentially evaluated. Optionally, the consumed resources include CPU utilization and memory usage. Optionally, weights are assigned respectively to a required inference time metric and a resource consumption metric, and performance is evaluated through a corresponding weighted average.

In this embodiment of this application, the first format of the AI model that has been trained by the user is used as the start, and the AI model format that can be supported by the target inference device is used as the target. The plurality of conversion paths are first determined, and then the trained AI model in the first format is converted into the plurality of AI models in the second format through each of the plurality of conversion paths. Then, performance evaluation is performed by deploying the plurality of AI models in the second format on the target inference device, to determine the optimal AI model.

This embodiment of this application provides a method for automated deployment of the AI model to the target inference device, which reduces manpower investment from AI engineers and automation engineers, and enables fast and accurate determining of an optimal conversion path, thereby ensuring stable operation of the target inference devices.

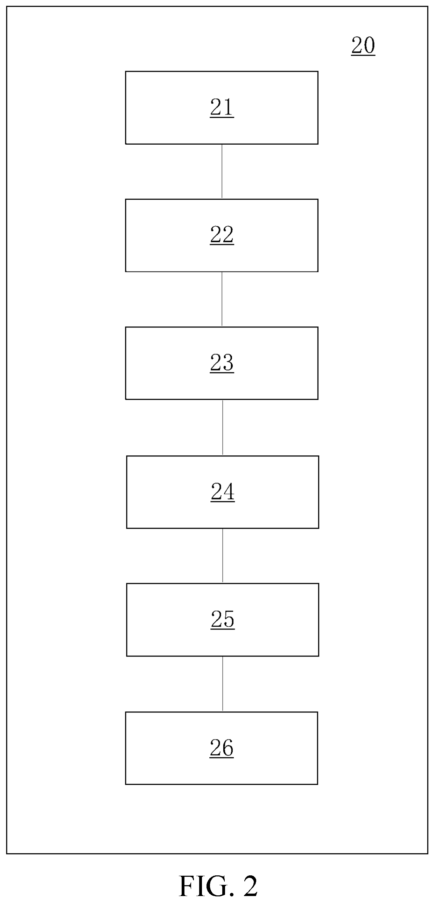

FIG. 2 is a schematic diagram of an AI model deployment apparatus according to an embodiment of this application. As shown in FIG. 2, an AI model deployment apparatus 20 includes:
a receiving module 21, configured to receive an AI model in a first format that has been trained by a user;
a first determining module 22, configured to determine a target inference device;
a second determining module 23, configured to determine at least one second format of the AI model that is supportable by the target inference device;
a third determining module 24, configured to determine a plurality of conversion paths based on the first format and the second format;
a conversion module 25, configured to convert the AI model in the first format through each of the plurality of conversion paths, to obtain a plurality of AI models in a second format; and
an evaluation module 26, configured to perform performance evaluation by deploying the plurality of AI models in the second format to the target inference device, so as to determine an optimal AI model.

Optionally, the AI model deployment apparatus further includes at least one plug-in. A configuration file of the plug-in specifies a supported model format conversion type. The plug-in is configured for conversion of an AI model format.

In addition, different plug-ins may run on a same machine as a system apparatus, or may run on different machines, ensuring that the entire system can run on a single machine, a plurality of server clusters, or a cloud platform with elastic computing capabilities. Different plug-ins may integrate a basic runtime environment on which the plug-ins depend, or may use a shared integrated runtime environment.

This embodiment of this application can help the user conveniently and rapidly deploy an AI model to a target inference device at a factory site.

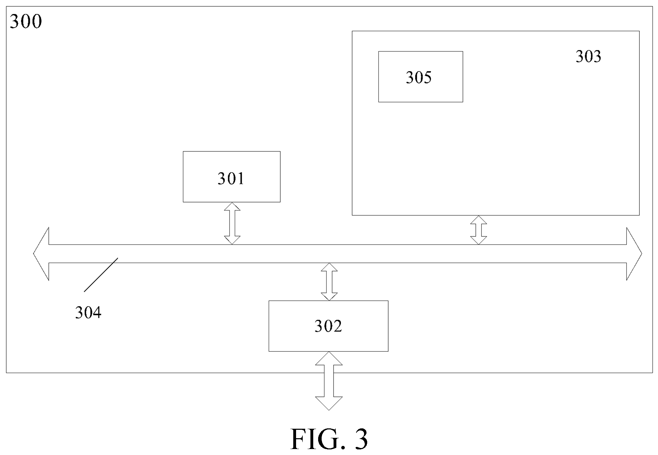

FIG. 3 is a schematic diagram of an electronic device according to an embodiment of this application. A specific implementation of the electronic device is not limited in a specific embodiment of this application. As shown in FIG. 3, an electronic device 300 may include a processor 301, a communication interface 302, a memory 303, and a communication bus 304.

The processor 301, the communication interface 302, and the memory 303 perform communication with each other through the communication bus 304.

The communication interface 302 is configured to communicate with another electronic device or a server.

The processor 301 is configured to execute a program 302, and specifically, may perform related steps in any one of the foregoing method embodiments.

Specifically, a program 305 may include program code. The program code includes computer operation instructions.

The processor 301 may be a CPU, or an application-specific integrated circuit (ASIC), or one or more integrated circuits configured to implement embodiments of this application. One or more processors included in an intelligent device may be a same type of processor, such as one or more CPUs; or may be different types of processors, such as one or more CPUs and one or more ASICs.

The memory 303 is configured to store a program 303. The memory 303 may include a high-speed RAM memory, or may include a non-volatile memory, for example, at least one magnetic disk memory.

The program 305 may be specifically configured to cause the processor 301 to perform any method in the plurality of method embodiments in the foregoing embodiments.

For a specific implementation of each step in the program 305, reference may be made to the corresponding description in the corresponding steps and units in the foregoing AI model deployment method embodiments. Details are not described herein. It may be clearly understood by a person skilled in the art that, for the purpose of convenient and brief description, for a detailed operating process of the foregoing device and module, reference may be made to the description of a corresponding process in the foregoing method embodiment, and the details are not described herein again.

This application further provides a computer-readable storage medium, storing instructions for causing a machine to perform any method in the plurality of method embodiments as described herein. Specifically, a system or an apparatus equipped with a storage medium may be provided. The storage medium stores software program code for implementing functions of any one of the foregoing embodiments, and enables a computer (or a CPU or an MPU) of the system or the apparatus to read and execute the program code stored in the storage medium.

In this case, the program code read from the storage medium may implement the functions of any one of the foregoing embodiments. Therefore, the program code and the storage medium storing the program code form a part of this application.

Embodiments of the storage medium for providing program code include a floppy disk, a hard disk, a magneto-optical disk, an optical disc (such as a CD-ROM, a CD-R, a CD-RW, a DVD-ROM, a DVD-RAM, a DVD-RW, or a DVD+RW), a magnetic tape, a non-volatile storage card, and a ROM. Optionally, the program code may be downloaded from a server computer through a communication network.

An embodiment of this application further provides a computer program product, including computer instructions. The computer instructions instruct a computing device to perform the operations corresponding to any one of the foregoing plurality of method embodiments.

It should be pointed out that according to requirements of implementation, each component/step described in embodiments of this application may be split into more components/steps, and two or more components/steps or partial operations of components/steps may be combined into new components/steps, to achieve the objects of embodiments of this application.

The foregoing method according to the embodiments of the present disclosure may be implemented in hardware and firmware, or implemented as software or computer code that may be stored in a recording medium (such as a CD-ROM, a RAM, a floppy disk, a hard disk, or a magneto-optical disk), or implemented as computer code that is originally stored in a remote recording medium or a non-transitory machine-readable medium and to be stored in a local recording medium and downloaded through a network, so that the method described herein may be stored in such software such as a recording medium using a general-purpose computer, a dedicated processor, or programmable or dedicated hardware (such as an ASIC or an FPGA) for processing. It may be understood that a computer, a processor, a microprocessor controller, or programmable hardware includes a storage component (such as a RAM, a ROM, or a flash memory) that may store or receive software or computer code. The method described herein is implemented when the software or computer code is accessed and executed by the computer, the processor, or the hardware. Furthermore, when the general-purpose computer accesses the code for implementing the method shown herein, execution of the code converts the general-purpose computer into a special-purpose computer configured to perform the methods shown herein.

It is to be noted that, not all steps and modules in the processes and diagrams of the system structures are necessary, and some steps or modules may be omitted according to an actual requirement. An execution sequence of the steps is not fixed and may be adjusted as required. The system structure described in the above embodiments may be a physical structure or a logical structure. To be specific, some modules may be implemented by the same physical entity, or some modules may be implemented by a plurality of physical entities, or may be jointly implemented by some components in a plurality of independent devices.

In the foregoing embodiments, a hardware module may be implemented in a mechanical manner or an electrical manner. For example, a hardware module may include permanently dedicated circuitry or logic (such as a dedicated processor, an FPGA, or an ASIC) to perform the corresponding operation. The hardware module may further include programmable logic or circuitry (such as a general-purpose processor or another programmable processor) that can be temporarily configured by software to perform the corresponding operation. The specific implementation (the mechanical manner, or through a dedicated permanent circuit, or a temporarily arranged circuit) may be determined based on considerations in costs and time.

The present invention has been shown and described in detail above with reference to the accompanying drawings and preferred embodiments. However, the present invention is not limited to these disclosed embodiments. Based on the foregoing plurality of embodiments, a person skilled in the art may know that more embodiments of the present invention can be obtained by combining the code review means in the different embodiments above. These embodiments are also within the protection scope of the present invention.

Nouns and pronouns about persons in this patent application are not limited to a specific gender.

## Claims

1. An artificial intelligence (AI) model deployment method, comprising:
- receiving (101) an AI model in a first format that has been trained by a user;
- determining (102) a target inference device;
- determining (103) at least one second format of the AI model that is supportable by the target inference device;
- determining (104) a plurality of conversion paths based on the first format and the second format;
- converting (105) the AI model in the first format through each of the plurality of conversion paths, to obtain a plurality of AI models in a second format; and
- performing performance evaluation (106) by deploying the plurality of AI models in the second format to the target inference device, to determine an optimal AI model.

2. The method according to claim 1, wherein
- before the determining (104) a plurality of conversion paths based on the first format and the second format, the method further comprises:
- traversing all preset plug-ins, and determining a format configured for conversion of each of the plug-ins;
- the determining (104) a plurality of conversion paths based on the first format and the second format comprises:
- determining a plurality of conversion paths based on the first format and the second format, wherein each of the plurality of conversion paths comprises at least one plug-in; and
- the converting (105) the AI model in the first format through each of the plurality of conversion paths, to obtain a plurality of AI models in a second format comprises:
- converting the AI model in the first format through the plug-in comprised in each of the plurality of conversion paths, to obtain the plurality of AI models in the second format.

3. The method according to claim 1, wherein the determining (103) at least one second format of the AI model that is supportable by the target inference device comprises:
- determining, based on an attribute of the target inference device, the at least one second format of the AI model that is supportable by the target inference device.

4. The method according to claim 1, wherein the optimal AI model comprises:
- an AI model that requires less inference time and/or consumes few resources on the target inference device.

5. The method according to claim 1, wherein the determining (102) a target inference device comprises:
- recommending a corresponding target inference device through AI for IT operations (AIOps) or machine learning operations (MLOps) based on the AI model in the first format.

6. An AI model deployment apparatus, comprising:
- a receiving module (21), configured to receive an AI model in a first format that has been trained by a user;
- a first determining module (22), configured to determine a target inference device;
- a second determining module (23), configured to determine at least one second format of the AI model that is supportable by the target inference device;
- a third determining module (24), configured to determine a plurality of conversion paths based on the first format and the second format;
- a conversion module (25), configured to convert the AI model in the first format through each of the plurality of conversion paths, to obtain a plurality of AI models in a second format; and
- an evaluation module (26), configured to perform performance evaluation by deploying the plurality of AI models in the second format to the target inference device, so as to determine an optimal AI model.

7. An electronic device (300), comprising a processor (301), a communication interface (302), a memory (303), and a communication bus (304), wherein the processor (301), the memory (303), and the communication interface (302) perform communication with each other through the communication bus (304); and
the memory (303) is configured to store at least one executable instruction, and the executable instruction causes the processor to perform an operation corresponding to the AI model deployment method according to any one of claims 1 to 5.

8. A computer storage medium, storing a computer program, wherein the program, when executed by a processor, implements the AI model deployment method according to any one of claims 1 to 5.

9. A computer program product, tangibly stored in a computer-readable medium and comprising computer-executable instructions, wherein the computer-executable instructions, when executed, cause at least one processor to perform the AI model deployment method according to any one of claims 1 to 5.
